# EUROPÄISCHE PATENTSCHRIFT

(11) **EP 3 379 229 B1**
(45) Veröffentlichungstag und Bekanntmachung des Hinweises auf die Patenterteilung: **09.03.2022**
(21) Anmeldenummer: 18163026.0
(22) Anmeldetag: 21.03.2018
(51) Int. Cl.: G01N 1/22, G01N 1/40, B01D 46/00

(54) **VORRICHTUNG ZUR ABSAUGUNG UND SEPARATION VON STOFFEN UND PARTIKELN AUS ABGASEN**
DEVICE FOR THE SUCTION AND SEPARATION OF SUBSTANCES AND PARTICLES FROM EXHAUST GASES
DISPOSITIF D'ASPIRATION ET DE SÉPARATION DE SUBSTANCES ET DE PARTICULES DE GAZ D'ÉCHAPPEMENT

(30) Priorität: 22.03.2017 DE 102017204786
(43) Veröffentlichungstag der Anmeldung: 26.09.2018
(73) Patentinhaber: ULT AG, 02708 Löbau (DE)
(72) Erfinder: Jakschik, Stefan, 02625 Bautzen (DE); Schütze, Ronny, 02763 Zittau (DE)
(74) Vertreter: Pfenning, Meinig & Partner mbB

(56) Entgegenhaltungen:
- CN-U- 205 590 027
- GB-A- 1 137 974
- US-A1- 2003 020 199
- US-A1- 2006 236 855
- US-A1- 2009 205 501
- US-A1- 2010 071 616
- US-A1- 2010 294 134

## Beschreibung

Die Erfindung betrifft eine Vorrichtung zur Absaugung und Separation von Stoffen und Partikeln aus Abgasen, die insbesondere bei der Herstellung dreidimensionaler Bauteile mittels selektivem Laserstrahlsintern oder Laserstrahlschmelzen anfallen.

Insbesondere bei der additiven Fertigung dreidimensionaler Bauteile mit einem pulverförmigen Werkstoff durch selektives Laserstrahlsintern oderschmelzen treten Partikel und Stoffe auf, die mit dem abgesaugten Abgas auch teilweise aus einer Vorrichtung zur Separation von Partikeln und Schadstoffen ausgetragen werden. Die sehr feinen festen Partikel werden dann nach einer Filterung gesammelt. Wegen der sehr kleinen Partikelgrößen stellen sie häufig ein toxisches und/oder ein anderes Gefährdungspotential, wie insbesondere eine hohe chemische Reaktivität dar.

Es ist daher wichtig den Kenntnisstand über das Gefährdungspotential der nach der Separation gesammelten festen Stoffe und Partikel und insbesondere die Kenntnis über jeweils angesammelte Masse zu verbessern.

Aus US 2003/0020199 A1 ist ein kontinuierlicher Prozess für die Herstellung von wasserabsorbierendem Harzpulver mit einem Oberflächensensor bekannt.

GB 1 137 974 A betrifft eine Filteranordnung.

Eine Staubsammeleinrichtung ist in CN 205 590 027 U beschrieben.

Die Offenbarung von US 2006/0236855 A1 betrifft eine Vorrichtung und ein Verfahren zur Separation von Staub.

Eine Klimaanlage mit Staubsammlung ist aus US 2010/0294134 A1 bekannt.

US 2009/0205501 A1 betrifft ebenfalls eine Staubsammelvorrichtung.

Daraus leitet sich die Aufgabe der Erfindung ab, die darin besteht, zumindest die Menge an separierten festen Stoffen und Partikeln insbesondere während des Separationsprozesses mit ausreichender Genauigkeit und ausreichender Sicherheit bestimmen zu können.

Erfindungsgemäß wird diese Aufgabe mit einer Vorrichtung, die die Merkmale des Anspruchs 1 aufweist, gelöst. Vorteilhafte Ausgestaltungen und Weiterbildungen der Erfindung können mit in untergeordneten Ansprüchen bezeichneten Merkmalen realisiert werden.

Bei der erfindungsgemäßen Vorrichtung ist in einem Gehäuse mindestens ein Filterelement zur Separation von Stoffen und Partikeln angeordnet. Mit einem zur Vorrichtung gehörenden Unterdruckerzeuger mit einem Anschluss zur Einleitung von Abgas, wird das unerwünschte Stoffe und Partikel enthaltende Abgas durch das mindestens eine Filterelement geführt. Die Stoffe und Partikel werden in einem Sammelbehälter abgelagert. Am und/oder im Sammelbehälter ist mindestens ein Sensor zur Bestimmung des Füllstands von im Sammelbehälter an dessen Boden gravitationskraftbedingt abgelagerten festen Stoffen und Partikeln vorhanden. Der mindestens eine Sensor ist mit einer elektronischen Auswerte- und Steuereinheit, einer optischen und/oder akustischen Anzeigeeinheit verbunden. Damit kann sequentiell beispielsweise in vorgegebenen Zeitabständen oder kontinuierlich der momentane Füllstand im Sammelbehälter bestimmt und für eine Anzeige oder eine Steuerung, auf die nachfolgend noch eingegangen werden soll, genutzt werden.

Bevorzugt ist ein Sensor, der über einen Kontakt mit am Boden des Sammelbehälters abgelagerten festen Stoffen und Partikeln den jeweiligen zulässigen, insbesondere einen maximal zulässigen Füllstand detektiert.

Der/die Sensor(en) können aber auch als berührungslos detektierender Sensor ausgebildet sein.

Mindestens zwei Sensoren können in verschiedenen Positionen in oder am Sammelbehälter angeordnet oder Sensoren so ausgebildet sein, dass sie unterschiedliche Füllstände an verschiedenen Positionen detektieren können. So kann beispielsweise ein Sensor den Füllstand im Zentrum und ein weiterer Sensor einen Füllstand in einem bestimmten definierten Abstand zur Innenwand des Sammelbehälters bestimmen. Die Bestimmten Füllstände können jeweils einzeln als ein nicht zu überschreitender Schwellwert genutzt werden. Es kann aber auch ein Mittelwert mehrerer zu einem Zeitpunkt bestimmter Füllstände, die an verschiedenen Positionen zur gleichen Zeit detektiert worden sind, einen Schwellwert, der nicht überschritten werden sollte bilden.

Es kann auch mindestens ein Sensor an einer mechanischen Vorrichtung befestigt sein. In diesem Fall kann der Sensor ein Signal generieren, wenn ein bestimmter Abstand zwischen Sensor und Oberfläche der abgelagerten festen Stoffe und Partikel erfasst worden ist. Dieser Abstand kann sehr klein sein. Es besteht aber auch die Möglichkeit, dass der Abstand gleich null ist und der Sensor die Oberfläche der am Boden des Sammelbehälters abgelagerten festen Stoffe und Partikel berührt. Dazu kann die mechanische Vorrichtung einen Wegsensor aufweisen, mit dem der jeweilige Füllstand bestimmt werden kann.

An der mechanischen Vorrichtung kann/können ein Endanschlag und/oder ein Endlagenschalter angeordnet sein, mit der ein Sensor definiert in einen Sammelbehälter eingeführt werden kann, so dass ein definierter Abstand vom Boden des Sammelbehälters und/oder ein Abstand des mindestens einen Sensors zur Oberfläche eines Bettes, das mit am Boden des Sammelbehälters abgelagerten Partikeln oder festen Stoffen eingehalten werden kann. Ein berührungslos detektierender Sensor kann so in einem Abstand von der Oberfläche eines mit Partikeln und Stoffen gebildeten Bettes angeordnet sein, in dem er seine größte Sensitivität aufweist.

Ein Endlagenschalter sollte mit der elektronischen Auswerte- und Steuereinheit verbunden sein. Bei Erreichen der gewünschten Position des Sensors, die insbesondere durch eine translatorische Bewegung der mechanischen Vorrichtung erreicht werden kann, kann so der elektronischen Auswerte- und Steuereinheit signalisiert werden, dass der Sensor betriebsbereit ist. Nachdem die Betriebsbereitschaft festgestellt worden ist, kann ein Signal generiert werden, wenn vom Sensor ein Messwert erfasst worden ist, der einen vorgegebenen Schwellwert überschreitet. Mit dem Signal kann angezeigt werden, dass ein Austausch des bis an einen Grenzwert gefüllten Sammelbehälters erforderlich ist. Allein oder zusätzlich kann auch eine Abschaltung der gesamten Vorrichtung und ggf. auch einer Anlage aus der eine Absaugung von Rohgas, in dem Partikel und unerwünschte Stoffe enthalten sind, dadurch initiiert werden. Für eine getrennte Signalgenerierung und Abschaltung können auch zwei Sensoren an einer oder auch zwei mechanischen Vorrichtungen angeordnet sein. Die Positionen der Sensoren sollten so gewählt sein, dass sie unterschiedliche Abstände zum Boden des Sammelbehälters und auch zur Oberfläche des mit dort abgelagerten Partikeln und festen Stoffen gebildeten Bettes aufweisen. Dabei kann mit dem vom Sensor, der den größeren Abstand aufweist, erfassten Messsignal das Signal generiert und mit dem Sensor, der in einem kleineren Abstand angeordnet ist, erfassten Messsignal ein Abschaltbefehl oder Signal generiert werden.

Die Bewegung der mechanischen Vorrichtung, mit der mindestens ein Sensor lokal definiert im Sammelbehälter positioniert werden kann, kann durch manuelles Einschieben einer Stange, an der mindestens ein Sensor angeordnet ist, oder mittels eines Linearantriebes erreicht werden. Bei Einsatz eines Linearantriebes kann dieser gesteuert werden, so dass eine definierte Positionierung des/der Sensors/Sensoren erreicht werden kann. Es kann aber auch ein Wegmesssystem, das mit der elektronischen Auswerte- und Steuereinheit verbunden ist, genutzt werden. Mit einem Wegmesssystem kann die mechanische Vorrichtung so beeinflusst werden, dass die translatorische Bewegung bei Erreichen der gewünschten vorgegebenen Position des/der Sensors/Sensoren gestoppt und die Messbereitschaft des/der Sensors/Sensoren der elektronischen Auswerte- und Steuereinheit signalisiert wird.

Der mindestens eine Sensor kann aber auch mittels der mechanischen Vorrichtung um mindestens eine Achse verschwenkt und/oder in seiner Position innerhalb des Sammelbehälters verändert werden. Dadurch können ebenfalls an mehreren Positionen der Oberfläche der abgelagerten festen Stoffe und Partikel Füllstände innerhalb des Sammelbehälters bestimmt werden.

Bei der Erfindung können auch mindestens zwei Sensoren, die jeweils ein unterschiedliches Messprinzip nutzen, vorhanden sein. Daraus resultiert beispielsweise eine erhöhte Redundanz.

Ein bei einer erfindungsgemäßen Vorrichtung einsetzbarer Sensor kann ein induktiver Sensor, ein kapazitiver Sensor, ein Radarsensor, ein optischer Sensor und/oder ein mit einem Kontaktschalter versehener Sensor sein.

Bei Erreichen mindestens eines vorgebbaren Füllstandes wird mittels der elektronischen Auswerte- und Steuereinheit eine Zuführung eines inerten Stoffes in den Sammelbehälter auf die Oberfläche der darin abgelagerten festen Stoffe und Partikel initiiert. Mittels der elektronischen Auswerte- und Steuereinheit kann auch ein Warnsignal generiert werden. Ein solcher vorgebbarer Füllstand kann ein bereits erläuterter Schwellwert sein. Ein inerter Stoff kann ein Pulver, eine Flüssigkeit oder eine Suspension sein, die über die Zuführung auf die Oberfläche des mit den abgelagerten festen Stoffen und Partikeln gebildeten Bettes aufgebracht werden kann und diese Oberfläche dadurch quasi versiegelt werden kann. Dadurch kann eine Abdichtung der Oberfläche gegen die Umgebungsatmosphäre erreicht und unerwünschte chemische Reaktionen vermieden werden.

Ein Warnsignal kann beispielsweise einen Bediener dazu auffordern einen vollen Sammelbehälter gegen einen leeren auszutauschen. Mit einem Warnsignal kann sogar eine Abschaltung der gesamten Anlage erreicht und dadurch auch der Herstellungsprozess bei dem das Abgas anfällt gestoppt werden.

Nachfolgend soll die Erfindung beispielhaft näher erläutert werden.

### Dabei zeigt:

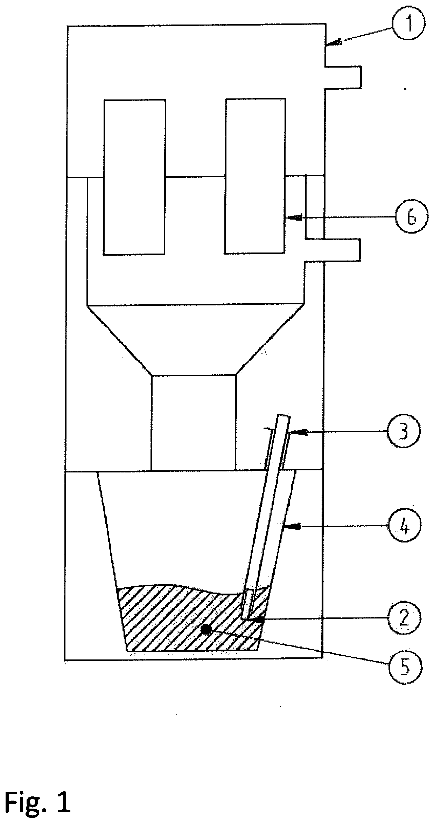

- Figur 1: in schematischer Form den Aufbau eines Beispiels einer erfindungsgemäßen Vorrichtung.

Bei der in Figur 1 gezeigten Vorrichtung ist ein Anschluss vorhanden, der rohgasseitig mit einer nicht dargestellten Anlage zum selektiven Lasersintern verbunden ist. An den zweiten Anschluss, der in Strömungsrichtung des abgesaugten Abgases hinter einem Filterelement 6 für Schadstoffe und insbesondere Partikel angeordnet ist, ist ein ebenfalls nicht dargestellter Unterdruckerzeuger angeschlossen.

Die mit dem Filterelement 6 separierten Partikel und sich bis dahin gebildete feste Stoffe gelangen gravitationskraftbeding in den Sammelbehälter 4 und lagern sich an seinem Boden ab und bilden das Bett 5 aus.

Bei diesem Beispiel ist ein Sensor 2 an einer Stirnseite einer mechanischen Vorrichtung 3 angebracht, mit dem der jeweilige momentane Füllstand an der Oberfläche des mit festen Stoffen und Partikeln gebildeten Bettes 5 bestimmt werden kann. Dabei kann die mechanische Vorrichtung 3 den Sensor 2 definiert in den Sammelbehälter hinein bewegen, so dass er sich in einer gewünschten Position und/oder in einem bestimmten bekannten Abstand zur momentanen Oberfläche angeordnet ist. Ist der Sensor 2 eine berührungslos messender induktiver Sensor kann bei Erreichen eines bekannten Abstandes des Sensors 2 zur Oberfläche der Füllstand über eine an der mechanischen Vorrichtung beim Einführen des Sensors 2 zurück gelegte Weglänge für die Bestimmung des Füllstandes genutzt werden. Dazu kann an der mechanischen Vorrichtung ein Wegsensor vorhanden sein.

In nichtdargestellter Form kann die mechanische Vorrichtung 3 am Sammelbehälter 4 oder einem Gehäuseteil der Vorrichtung gelenkig befestigt werden, so dass die mechanische Vorrichtung um mindestens eine Achse verschwenkt werden kann und dadurch eine Füllstandsbestimmung an mehreren Positionen innerhalb des Sammelbehälters möglich wird. Ist die Befestigung mit einem Kardan- oder Gleichlaufgelenk realisiert können noch mehr Positionen erreicht werden.

In ebenfalls nicht dargestellter Form kann mindestens ein weiterer Sensor 2 an oder in einem Sammelbehälter 4 statisch angeordnet sein, mit dem eine alleinige oder mit mindestens einem weiteren Sensor 2 kombinierte Füllstandsbestimmung erreichbar ist.

Ein oder mehrere Sensor(en) 2 können in ebenfalls nicht dargestellter Form an eine elektronische Auswerte- und Steuereinrichtung übertragen und die übertragenen Messwerte für Füllstände, wie im allgemeinen Teil der Beschreibung erläutert, genutzt werden.

## Patentansprüche

1. Vorrichtung zur Absaugung und Separation von Stoffen und Partikeln aus Abgasen, die insbesondere bei der Herstellung dreidimensionaler Bauteile mittels selektivem Laserstrahlsintern oder Laserstrahlschmelzen anfallen,
wobei die Vorrichtung ein Gehäuse (1), einen Anschluss zur Einleitung von Abgas, mindestens ein Filterelement (6), einen Unterdruckerzeuger, einen Anschluss für den Unterdruckerzeuger, einen Sammelbehälter (4), mindestens einen Sensor (2) zur Bestimmung des Füllstands von im Sammelbehälter (4) an dessen Boden gravitationskraftbedingt abgelagerten festen Stoffen und Partikeln, sowie eine elektronische Auswerte- und Steuereinheit umfasst, wobei das mindestens eine Filterelement (6) zur Separation von Stoffen und Partikeln in dem Gehäuse (1) angeordnet ist, wobei mit dem Unterdruckerzeuger das unerwünschte Stoffe und Partikel enthaltende Abgas von dem Anschluss zur Einleitung von Abgas durch das mindestens eine Filterelement (6) geführt ist und die Stoffe und Partikel (5) in dem Sammelbehälter (4) abgelagert werden, und
am und/oder im Sammelbehälter (4) der mindestens eine Sensor (2) zur Bestimmung des Füllstands von im Sammelbehälter (4) an dessen Boden gravitationskraftbedingt abgelagerten festen Stoffen und Partikeln angeordnet ist, wobei der mindestens eine Sensor (2) mit der elektronischen Auswerte- und Steuereinheit verbunden ist; **dadurch gekennzeichnet, dass** die elektronische Auswerte- und Steuereinheit dazu ausgebildet ist, beim Erreichen mindestens eines vorgebbaren Füllstandes eine Zuführung eines inerten Stoffes in den Sammelbehälter (4) auf die Oberfläche der darin abgelagerten festen Stoffe und Partikel zu initiieren.

2. Vorrichtung nach Anspruch 1, **dadurch gekennzeichnet, dass** der/die Sensor(en) (2) als ein über einen Kontakt mit am Boden des Sammelbehälters (4) abgelagerten festen Stoffen und Partikeln detektierender Sensor (2) ausgebildet ist/sind.

3. Vorrichtung nach einem der vorhergehenden Ansprüche, **dadurch gekennzeichnet, dass** bei Erreichen mindestens eines vorgebbaren Füllstandes mittels der elektronischen Auswerte- und Steuereinheit ein Warnsignal generierbar ist.

4. Vorrichtung nach einem der vorhergehenden Ansprüche, **dadurch gekennzeichnet, dass** mindestens zwei Sensoren (2) in verschiedenen Positionen in oder am Sammelbehälter (4) angeordnet sind oder Sensoren (2) so ausgebildet sind, dass sie unterschiedliche Füllstände an verschiedenen Positionen detektieren.

5. Vorrichtung nach einem der vorhergehenden Ansprüche, **dadurch gekennzeichnet, dass** mindestens ein Sensor (2), mit dem ein Signal generierbar ist, wenn ein bestimmter Abstand zwischen dem mindestens einen Sensor (2) und der Oberfläche der abgelagerten festen Stoffe und Partikel erfasst worden ist, an einer mechanischen Vorrichtung (3) befestigt ist.

6. Vorrichtung nach dem vorhergehenden Anspruch, dass der mindestens eine Sensor (2) mittels der mechanischen Vorrichtung (3) um mindestens eine Achse verschwenkbar und/oder in seiner Position innerhalb des Sammelbehälters (4) veränderbar ist.

7. Vorrichtung nach einem der beiden vorhergehenden Ansprüche, **dadurch gekennzeichnet, dass** an der mechanischen Vorrichtung (3) ein Endanschlag, ein Endlagenschalter, ein translatorischer Antrieb und/oder einer Wegmesssystem angeordnet ist/sind.

8. Vorrichtung nach einem der drei vorhergehenden Ansprüche, **dadurch gekennzeichnet, dass** der Endlagenschalter, der translatorische Antrieb und/oder das Wegmesssystem mit der elektronischen Auswerte- und Steuereinheit verbunden ist.

9. Vorrichtung nach einem der vorhergehenden Ansprüche, **dadurch gekennzeichnet, dass** mindestens zwei Sensoren (2), die jeweils ein unterschiedliches Messprinzip nutzen, vorhanden sind.

10. Vorrichtung nach einem der vorhergehenden Ansprüche, **dadurch gekennzeichnet, dass** ein Sensor (2) ein induktiver Sensor, ein kapazitiver Sensor, ein Radarsensor, ein optischer Sensor und/oder ein mit einem Kontaktschalter versehener Sensor ist.

## Claims

1. A device for the suction and separation of substances and particles from exhaust gases, which are produced in particular during the manufacture of three-dimensional components by means of selective laser beam sintering or laser beam melting,
wherein the device comprises a housing (1), a connection for introducing exhaust gas, at least one filter element (6), a vacuum generator, a connection for the vacuum generator, a collecting container (4), at least one sensor (2) for determining the filling level of solid substances and particles deposited in the collecting container (4) at its bottom due to gravitational force, and an electronic evaluation and control unit, wherein
the at least one filter element (6) for separating substances and particles is arranged in the housing (1), wherein the exhaust gas containing undesired substances and particles is led from the connection for introducing exhaust gas through the at least one filter element (6) using the vacuum generator and the substances and particles (5) are deposited in the one collecting container (4), and
the at least one sensor (2) for determining the filling level of solid substances and particles deposited in the collecting container (4) at its bottom due to gravitational force is arranged on and/or in the collecting container (4), the at least one sensor (2) being connected to the electronic evaluation and control unit;
**characterized in that** the electronic evaluation and control unit is designed to initiate a feed of an inert substance into the collecting container (4) onto the surface of the solid substances and particles deposited therein when at least one predeterminable filling level is reached.

2. The device according to claim 1, **characterized in that** the sensor(s) (2) is/are designed as a sensor (2) detecting via a contact with solid substances and particles deposited at the bottom of the collecting container (4).

3. The device according to one of the preceding claims, **characterized in that** a warning signal can be generated by means of the electronic evaluation and control unit when at least one predeterminable filling level is reached.

4. The device according to one of the preceding claims, **characterized in that** at least two sensors (2) are arranged in different positions in or on the collecting container (4) or sensors (2) are designed to detect different filling levels at different positions.

5. The device according to any one of the preceding claims, **characterized in that** at least one sensor (2), by means of which a signal can be generated when a certain distance between the at least one sensor (2) and the surface of the deposited solid substances and particles has been detected, is attached to a mechanical device (3).

6. The device according to the preceding claim, that the at least one sensor (2) is pivotable about at least one axis and/or variable in its position within the collecting container (4) by means of the mechanical device (3).

7. The device according to one of the two preceding claims, **characterized in that** an end stop, a limit position switch, a translatory drive and/or a displacement measuring system is/are arranged on the mechanical device (3).

8. Device according to one of the three preceding claims, **characterized in that** the limit position switch, the translatory drive and/or the displacement measuring system is connected to the electronic evaluation and control unit.

9. The device according to one of the preceding claims, **characterized in that** at least two sensors (2), each using a different measuring principle, are provided.

10. The device according to any of the preceding claims, **characterized in that** a sensor (2) is an inductive sensor, a capacitive sensor, a radar sensor, an optical sensor and/or a sensor provided with a contact switch.

## Revendications

1. Dispositif d'aspiration et de séparation de substances et de particules de gaz d'échappement qui se produisent en particulier lors de la fabrication de composants tridimensionnels au moyen d'un frittage sélectif par faisceau laser ou d'une fusion par faisceau laser,
où le dispositif comprend un boitier (1), un raccordement pour l'introduction des gaz d'échappement, au moins un élément filtrant (6), un générateur de dépression, un raccordement pour le générateur de dépression, un récipient de collecte (4), au moins un capteur (2) permettant la détermination du niveau de remplissage en substances solides et particules déposées du fait de la force gravitationnelle dans le récipient de collecte (4) dans son fond, ainsi qu'une unité électronique d'évaluation et de commande, dans lequel
l'au moins un élément filtrant (6) pour la séparation de substances et de particules est disposé dans le boitier (1), dans lequel, avec le générateur de dépression, les gaz d'échappement contenant des substances et particules indésirables sont emmenés du raccordement pour l'introduction de gaz d'échappement par l'au moins un élément filtrant (6) et les substances et particules (5) sont déposées dans le récipient de collecte (4), et
l'au moins un capteur (2) permettant la détermination du niveau de remplissage en substances solides et particules déposées du fait de la force gravitationnelle dans le récipient de collecte (4) dans son fond est disposé sur et/ou dans le récipient de collecte (4), où l'au moins un capteur (2) est relié avec l'unité d'évaluation et de commande ;
**caractérisé en ce que** l'unité électronique d'évaluation et de commande est conçue pour initialiser, lorsqu'au moins un état de remplissage prédéfinissable est atteint, une introduction d'une substance inerte dans le récipient de collecte (4) sur la surface des substances solides et particules y étant déposées.

2. Dispositif selon la revendication 1, **caractérisé en ce que** le/les capteur/s (2) est conçu/sont conçus sous forme de capteurs (2) détectant des substances solides et particules déposées sur le fond du récipient de collecte (4) par le biais d'un contact.

3. Dispositif selon l'une des revendications précédentes, **caractérisé en ce que**, lorsqu'au moins un niveau de remplissage prédéfinissable est atteint, un signal d'avertissement peut être généré au moyen de l'unité électronique d'évaluation et de commande.

4. Dispositif selon l'une des revendications précédentes, **caractérisé en ce qu'**au moins deux capteurs (2) sont disposés dans diverses positions dans ou sur le récipient de collecte (4), ou des capteurs (2) sont conçus de telle manière qu'ils détectent divers niveaux de remplissage à différentes positions.

5. Dispositif selon l'une des revendications précédentes, **caractérisé en ce qu'**au moins un capteur (2), avec lequel un signal peut être généré lorsqu'une distance déterminée entre l'au moins un capteur (2) et la surface des substances solides et particules déposées a été détectée, est fixé à un dispositif mécanique (3).

6. Dispositif selon la revendication précédente, que l'au moins un capteur (2) peut être pivoté autour d'au moins un axe et/ou peut être modifié dans sa position à l'intérieur du récipient de collecte (4) au moyen du dispositif mécanique (3).

7. Dispositif selon l'une des deux revendications précédentes, **caractérisé en ce qu'**une butée terminale, un commutateur de position terminale, un entraînement en translation et/ou un système de mesure de parcours est disposé/sont disposés sur le dispositif mécanique (3).

8. Dispositif selon l'une des trois revendications précédentes, **caractérisé en ce que** le commutateur de position terminale, l'entrainement en translation et/ou le système de mesure de parcours est relié avec l'unité électronique d'évaluation et de commande.

9. Dispositif selon l'une des revendications précédentes, **caractérisé en ce qu'**au moins deux capteurs (2), qui utilisent respectivement un principe de mesure différent, sont présents.

10. Dispositif selon l'une des revendications précédentes, **caractérisé en ce qu'**un capteur (2) est un capteur inductif, un capteur capacitif, un capteur radar, un capteur optique et/ou un capteur muni d'un commutateur de contact.
